# EUROPÄISCHE PATENTSCHRIFT

(11) **EP 1 081 921 B1**
(45) Veröffentlichungstag und Bekanntmachung des Hinweises auf die Patenterteilung: **25.01.2006**
(21) Anmeldenummer: 00119266.5
(22) Anmeldetag: 06.09.2000
(51) Int. Cl.: H04L 29/12

(54) **Verfahren zur Vergabe von IP-Adressen in Kommunikationsnetzen**
Method for allocating IP-addresses in communication networks
Procédé pour l' allocation d' adresses IP dans des réseaux de télécommunication

(30) Priorität: 06.09.1999 DE 19942465
(43) Veröffentlichungstag der Anmeldung: 07.03.2001
(73) Patentinhaber: PHOENIX CONTACT GmbH & Co. Kg, 32825 Blomberg (DE)
(72) Erfinder: Jasperneite, Jürgen, Dipl.-Ing, 32839 Steinheim (DE); Matthias, Jurgen, Dipl.-Ing, 31552 Rodenberg (DE); Schiller, Olaf, Dipl.-Phys.-Ing., 33189 Schlangen (DE)
(74) Vertreter: Herden, Andreas F.

(56) Entgegenhaltungen:
- WO-A-98/26554
- US-A- 5 526 489
- IETF NETWORK WORKING GROUP RFC 2131 DYNAMIC HOST CONFIGURATION PROTOCOL DHCP, [Online] März 1997 (1997-03), Seiten 1-44, XP002232834 Gefunden im Internet: <URL:http://www.ietf.org/rfc/rfc2131.txt?n umber=2131> [gefunden am 2003-02-27]

## Beschreibung

Die Erfindung betrifft ein Verfahren zur Vergabe von Adressen in Kommunikationsnetzen, insbesondere zur Vergabe von Adressen in Netzen, welche auf TCP/IP-Protokollen basieren.

TCP/IP-Netze haben nicht nur durch die explosionsartige Verbreitung des Internets eine herausragende Stellung im Vergleich zu anderen entsprechenden Protokollen erlangt. Durch die Verwendung des IP-Protokolls muß jedem Teilnehmer des Kommunikationsnetzes eine individuelle IP-Adresse zugeordnet werden. Mit dem IP-Protokoll werden Datenpakete vom Ursprung zum Ziel innerhalb des Netzes übermittelt, wobei der Sender und der Empfänger jeweils durch die eindeutige IP-Adresse identifiziert sind.

Für die Zuordnung dieser IP-Adressen sind nach dem Stand der Technik verschiedene Verfahren bekannt. So besteht beispielsweise die Möglichkeit, die Adresse manuell direkt in eine Konfigurationsdatei des jeweiligen Teilnehmer des Kommunkationsnetzes, beispielsweise eines Rechner, einzutragen.

Komfortabler ist es jedoch, wenn sich der betreffende Rechner die notwendigen Daten von einem entsprechend eingerichteten Server herunterlädt. Die Vergabe der IP-Adresse kann dabei entweder statisch oder dynamisch erfolgen. In beiden Fällen muß im Konfigurationsserver eine Zuordnung der jeweiligen IP-Adresse und der MAC-(Medium Access Control)-Adresse des Teilnehmers abgelegt sein, da die Übermittlung der Datenpakete im Netz mittels des übertragens von sogenannten Datagrammen realisiert ist, welche über die genannte MAC-Adresse im Datenrahmen den Empfänger bzw. Sender identifizieren. Der Server benutzt zum Übertragen der IP-Adresse oder anderer Konfigurationsparameter an den Teilnehmer deshalb dessen MAC-Adresse, beispielsweise dessen Ethernet-Adresse in einem Ethernet-LAN gemäß IEEE 802.3.

Für das Laden der IP-Adresse vom Konfigurationsserver sind verschiedene Protokolle bekannt, beispielsweise RARP (Reverse Address Resolution Protocol), Bootp oder DHCP (Dynamic Host Control Protocol), welche in den TCP/IP-Stapeln der bekannten Betriebssysteme zumindest teilweise implementiert sind.

Ein Verfahren und eine Vorrichtung zur Zuweisung von IP-Adressen mittels des DHCP-Protokolls ist in der WO 98/26554 offenbart. Dabei überwacht ein Vermittlungsknoten die Zuweisung von IP-Adressen durch einen DHCP-Server. Wenn die IP-Adresse einem Client zugewiesen wurde, verknüpft der Vermittlungsknoten die zugewiesenen IP-Adressen mit zuverlässigen Kennungen des Clients. Die Vergabe einer IP-Adresse erfolgt dabei erst, nachdem der Client eine entsprechend Anforderung gesendet hat. Der Vermittlungsknoten empfängt dazu eine "DHCPDISCOVER"-Anforderung und eine "DHCPACK"-Antwort des DHCP-Servers und lernt dadurch die vergebene IP-Adresse kennen.

In US-Patent 5,526, 489 wird die Vergabe von IP-Adressen in einem Kommunikations-Netzwerks mittels eines "Reverse Address Resolution Protocol"-Verfahrens (RARP) beschrieben, bei welchem die Vergabe einer IP-Adresse unabhängig von der physikalischen Adresse. Das Protokoll wird in einem Prozessor mit einer Vielzahl von Ports verwendet, von welchen wenigstens einer mit einer Punkt-zu-Punkt-Verbindung mit einem entfernten Netzwerkgerät verbunden ist Anstelle einer Identifizierung über die physikalische Adresse wird dabei auf eine Anforderung eines N_etzwerk-Gerätes zur Zuteilung einer IP-Adresse eine Identifizierung über den Port eines Vermittlungsknotens, an welchem das Gerät angeschlossen ist, vorgenommen.
_Bei der statischen Zuweisung wird die IP-Adresse zeitlich unbegrenzt einem einzelnen System zugewiesen, während beim dynamischen Verfahren beispielsweise ein Rechner eine freie IP-Adresse aus einem Adreßpool erhält, wobei die IP-Adresse nur für einen vorbestimmten Zeitraum vergeben wird und sich somit mehrfach ändern kann.

Nachteilig sowohl beim statischen als auch beim dynamischen Verfahren ist, dass die MAC-Adresse jedes Teilnehmers des Kommunikationsnetzes abgelesen und manuell auf dem Konfigurationsserver eingetragen werden muß. Das Ablesen und Einschreiben der MAC-Adresse in Form eines 6-Byte-Wertes in hexadezimaler Notation kann leicht zu Fehlern führen, was eine Zuordnung der IP-Adresse mittels eines der genannten Protokolle verhindert und somit eine gültige Konfiguration des betreffenden Teilnehmers unmöglich macht. Das Auswechseln eines Teilnehmers oder das Vertauschen zweier Rechner im Netz hat immer zur Folge, dass sich die jeweiligen MAC-Adressen ändern und diese auf die beschriebene Weise in der Konfigurationsdatei nachgetragen werden müssen. Das dynamische Verfahren zur Vergabe der IP-Adressen weist weiterhin den Nachteil auf, dass sich die Adresse eines Teilnehmers im Laufe der Zeit ändern kann, was den Zugriff auf diesen Teilnehmer erschwert.

Die beschriebenen Umstände haben zur Folge, dass die Konfiguration derartiger Kommunikationsnetze hochqualifiziertem Personal vorbehalten bleibt, da nur diese den Betrieb des Netzes sicherstellen können.

Aufgabe der Erfindung ist es somit, ein Verfahren bereitzustellen, mit welchem die Konfiguration, insbesondere die Vergabe von Adressen in Kommunikationsnetzen einfacher gestaltet werden kann.

Dies wird schon mit einem Verfahren mit den Merkmalen des Anspruchs 1 bzw. mit einem Kommunikationsnetz mit den Merkmalen des Anspruchs 11 gelöst. Weitere vorteilhafte Ausführungsformen der Erfindung sind in den Unteransprüchen angegeben.

Das erfindungsgemäße Verfahren zur Vergabe von Adressen in Kommunikationsnetzen ermöglicht beispielsweise bei Netzen, welche auf TCP/IP-Protokollen basieren eine quasiautomatische Zuordnung der IP-Adressen während der Initialisierung des Systems oder eines einzelnen Teilnehmers, ohne dass Daten, insbesondere die MAC-Adressen der Netzteilnehmer, abgelesen und in eine Konfigurationsdatei eingetragen werden müssen. Damit ist der Mensch als mögliche Fehlerquelle, insbesondere bei üblichen Wartungsaufgaben, wie dem Austausch von Komponenten oder dem Anschließen von neuen Teilnehmern an das Netz ausgeschaltet, wenn in einer vorherigen Projektierung die Zuordnung von vorbestimmten IP-Adressen zu den Kopplungseinrichtungen und deren jeweiligen Ports im Netz, beispielsweise auf einem Konfigurationsrechner, abgelegt ist und die jeweilige Kopplungseinrichtung die MAC-Adressen von an ihren Ports angeschlossenen Teilnehmern erfaßt und daraufhin die in der abgelegten Zuordnung vorbestimmten IP-Adressen an die durch die MAC-Adressen festgelegten Endteilnehmern gesendet werden, welche an den zugordneten Ports angeschlossen sind. Die Intelligenz der Kopplungseinrichtungen zur Durchführung der erfindungsgemäßen Verfahren kann erfindungsgemäß entweder zentral im Gerät und/oder direkt an ihren Ports angeordnet sein. Auf die beschriebene Weise werden die IP-Adressen zu den projektierten Endteilnehmern gesendet, ohne dass ihre zweiten Adressen, d.h. ihre MAC-Adressen in irgendeine Konfigurationsdatei eingetragen werden müssen.

Weiterhin ermöglicht die Erfindung, dass im Betrieb eine veränderte Zuordnung von einem bestimmten Kopplungseinrichtungsport zu einer MAC-Adresse, beispielsweise durch den Austausch einen Rechners oder durch das Anschließen eines weiteren Rechners an einen freien Port erkannt und gemeldet werden kann. Die Konfiguration des Systems und die Veränderung kann automatisch angepaßt und/oder dem Anwender gemeldet werden. Das Hinzufügen eines neuen Netzteilnehmers wird dabei dadurch erkannt, dass vorher nicht belegte Ports eine MAC-Adresse melden. Die bei der Inbetriebnahme ermittelten Daten wie die Zuordnung von IP-Adresse, Ethernet-Adresse und Kopplungselement/Port können auch zu Diagnosezwecken verwendet werden.

Das Prinzip der Erfindung läßt sich auf alle Kommunikationsnetze anwenden, welche auf TCP/IP-Protokollen basieren, insbesondere das IP-Protokoll verwenden. Beispielsweise ist die Erfindung auf eine Vielzahl von LAN-oder MAN-Kommunikationsnetze anwendbar. Die in den jeweiligen Datagrammen im Header angegebenen Ziel- bzw. Quelladressen werden in der vorliegenden Erfindung allgemein als MAC-Adressen bezeichnet.

Die Erfindung läßt sich weiterhin mit einer Vielzahl von Koppeleinrichtungen verwenden, beispielsweise Bridges, Hubs, Switches oder Router, wenn die jeweilige Kopplungseinrichtung mit Fähigkeiten ausgestattet ist, um die beschriebenen Verfahren auszuführen. In dieser Hinsicht ist ein geschaltetes Ethernet-Netz für die Ausführung des erfindungsgemäßens Verfahrens geeignet. Die Erfindung ist auch auf Kommunikationsnetze anwendbar, welche unterschiedliche LANs umfassen, die z. B. mittels einer Bridge miteinander gekoppelt sind.

Um alle Netzteilnehmer definiert und determiniert mit ihrer jeweiligen IP-Adresse zu versorgen, kann zuerst die jeweilige Kopplungseinrichtung und nachfolgend die an den Ports der Kopplungseinrichtung angeschlossenen Endteilnehmer jeweils mit ihren ersten, d.h. ihren IP- Adressen konfiguriert werden. Dabei erhält eine Kopplungseinrichtung die in einer Tabelle abgelegte, ihr zugeordnete IP-Adresse und nachfolgend erhalten die an die Ports der Kopplungseinrichtungen angeschlossenen Endteilnehmern ihre in der Tabelle abgelegten, zugeordneten IP-Adressen.

Um einen undefinierten Zustand des Netzwerkes zu verhindern, können die Kopplungseinrichtungen bis zum Empfang ihrer zugeordneten IP-Adresse ihre jeweiligen Ports so eingestellt haben, dass Daten nur empfangen, aber nicht gesendet werden können.

Um den Kopplungseinrichtungen die Erfassung der MAC-Adressen der an den jeweiligen Ports angeschlossenen Endteilnehmern zu ermöglichen, kann vorgesehen sein, dass ein Endteilnehmer ohne gültige IP-Adresse so eingerichtet ist, dass dieser eine Nachricht an das Kommunikationsnetz abgibt, welche von der Kopplungseinrichtung bzw. dem entsprechenden Port genutzt wird, um die MAC-Adresse des Endteilnehmers aus der Nachricht zu decodieren. Vorteilhafterweise wird dabei kein weiterer Teilnehmer des Netzes in den-Vorgang eingebunden. Es kann jedoch auch vorgesehen sein, dass eine Konfigurationseinrichtung des Kommunikationsnetzes alle Teilnehmer im Rahmen einer Broadcast-Aufforderung diese zum Absenden einer Nachricht veranlaßt, welche es wiederum den jeweiligen Kopplungseinrichtungen bzw. Ports ermöglicht, die jeweiligen MAC-Adressen festzustellen. Dieser Vorgang kann, muß jedoch nicht einheitlich und zum gleichen Zeitpunkt überall im Netz stattfinden.

Nach der Ermittlung der MAC-Adresse kann dem Endteilnehmer seine zugeordnete IP-Adresse mitgeteilt werden. Dies kann vorteilhafterweise durch die Kopplungseinrichtung selbst bzw. den jeweiligen Port erfolgen, womit das Vorsehen einer externen Konfigurationseinrichtung in Form eines Konfigurationsrechners entfallen kann, wenn die Zuordnungstabelle in den einzelnen Kopplungseinrichtungen selbst abgespeichert ist.

Die Erfindung wird im folgenden durch das Beschreiben einiger Ausführungsformen unter Zugrundelegen der anliegenden Zeichnungen erläutert, wobei:

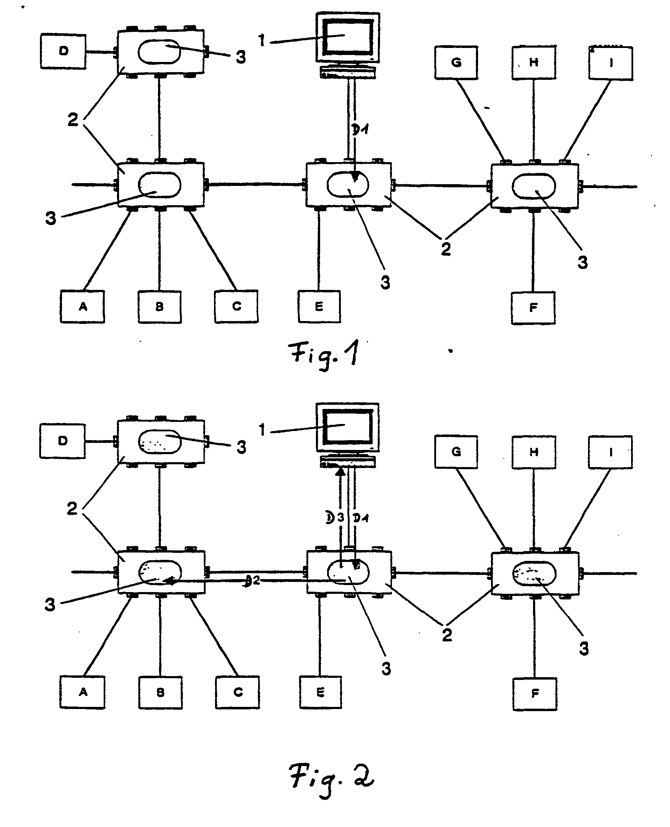

Fig. 1 bis 6 den gleichen Teilausschnitt eines TCP/IP-Kommunikationsnetzes in unterschiedlichen Stadien der Vergabe von IP-Adressen zeigen.

Fig. 1 zeigt einen Ausschnitt eines Ethernet-LAN nach IEEE 802.3 zur Ausführung des erfindungsgemäßen Verfahrens. Gezeigt sind mehrere Endteilnehmer A bis F, welche an den Ports, d. h. den Anschlußpunkten von Netzkoppeleinrichtungen 2 an das Kommunikationsnetz angeschlossen sind. Im vorliegenden Fall sind die Koppeleinrichtungen alle als Ethernet-Switches ausgeführt. In der dargestellten Form weisen die Switches 2 jeweils acht Ports auf, die jedoch nicht alle belegt sind, so dass das Netz durch den Anschluß von weiteren Endteilnehmern, beispielsweise Druckern oder Rechnern, erweitert werden kann. An einem der Switches 2 ist ein Konfigurationsrechner 1 angeschlossen. Jedem Endteilnehmer des Netzes ist Hardware-mäßig eine 6 Byte umfassende MAC-Adresse zugeordnet, die im vorliegenden Fall eine 48-Bit-breite Ethernet-Adresse der Anschaltkarte eines angeschlossenen Rechners ist.

Auf dem Konfigurationsrechner ist eine Tabelle abgelegt, welche vorbestimmten IP-Adressen zu den jeweiligen Switches und vorbestimmten IP-Adressen zu den Ports eines jeden im Netz befindlichen Switch zuordnet. Jedem Teilnehmer des beschriebenen Kommunikationsnetzes, d. h. beispielsweise jeder Endteilnehmer A bis F und jede Kopplungseinrichtung 2, sowie der Konfigurationsrechner 1 weisen somit eine eindeutige, 32 Bit breite IP-Adresse auf, welche den jeweiligen Teilnehmer eindeutig bezüglich der Vermittlungschicht des OSI-Referenzmodells im Netz identifiziert. Es ist im allgemeinen für die Datenübermittlung im beschriebenen Kommunikationsnetz notwendig, dass sowohl die Ethernet- als auch die IP-Adresse eines beteiligten Endteilnehmers bekannt ist. Die IP-Adresse wird nach dem erfindungsgemäßen Verfahren dabei quasiautomatisch vergeben.

Hierzu prüfen die Switches 2 nach dem Hochlaufen, ob eine eigene gültige IP-Adresse vorliegt. Ist dies nicht der Fall, wird ein spezieller Dienst 3 in den jeweiligen Switches 2 gestartet, welcher die betroffenen Switches in einen "Receive only"-Mode schaltet. Dieser bewirkt, dass von allen Ports der Switches Datenpakete empfangen und ausgewertet werden können, jedoch nicht weitergeleitet werden. Der betroffene Switch wartet auf ein Datenpaket, in welchem ihm seine eigene IP-Adresse, die Subnetzmaske etc. mitgeteilt wird. Hierzu sendet der Konfigurationsrechner 1 die entsprechenden Daten an den jeweiligen Switch, da im Konfigurationsrechner alle Zuordnungen abgelegt sind.

Anfangs befinden sich alle in Fig. 1 gezeigten Switches im "Receive only"-Mode. Der Konfigurationsrechner 1 sendet nun die IP-Adresse, welche dem Switch zugeordnet ist, an den er angeschlossen ist. Hierzu entnimmt der Rechner die entsprechenden Daten aus der vorprojektierten Zuordnungstabelle. Das Datenpaket wird über ein spezielles Protokoll vom Konfigurationsrechner an den ersten Switch übermittelt. Das Paket enthält die Netzparameter für den ersten Switch und die Ports, an welchen weitere Switches angeschlossen sind. Der erste Switch empfängt dieses Datagramm und wertet es aus. Die an den ersten Switch übermittelte zugeordnete IP-Adresse bewirkt, dass der erste Switch seinen "Receive only"-Mode abschaltet. Er generiert aus dem erhaltenen Datagramm weitere Datenpakete, welche an seine entsprechenden Ports gesendet werden, an denen Kopplungseinrichtungen angeschlossen sind. Diese weiteren Datenpakete umfassen dabei die jeweiligen Netzparametern für die an den Ports angeschlossenen Kopplungseinrichtungen. Auf die beschriebene Weise versorgt jeder Switch die direkt an ihn angeschlossenen Switches mit den benötigten Netzparametern, wie die IP-Adresse, die Subnetzmaske etc. Das Aufschalten der Switches erfolgt in der beschriebenen Ausführungsform des Verfahrens somit nacheinander, beginnend mit dem Switch, an welchem der Konfigurationsrechner angeschlossen ist.

Der gesamte Vorgang des Aufschaltens der Switches ist in den Fig. 1 bis 4 gezeigt. Dabei wird in Fig. 1 mit der Datenübertragung D1 der erste Switch konfiguriert, d.h. beispielsweise mit seiner IP-Adresse versorgt, während Fig. 2 die Übertragung D2 der Netzparameter zu dem Switch darstellt, welcher links vom ersten Switch angeordnet ist. Dabei empfängt der erste Switch das vom Konfigurationsrechner erhaltene Datagramm, wertet es aus und generiert ein neues Datenpacket, das an den linken Port gesendet wird, an welchem der zweite Switch angeschlossen ist. Dieses Datagramm enthält die Netzparameter für das zweite Kopplungselement, d.h. den zweiten Switch.

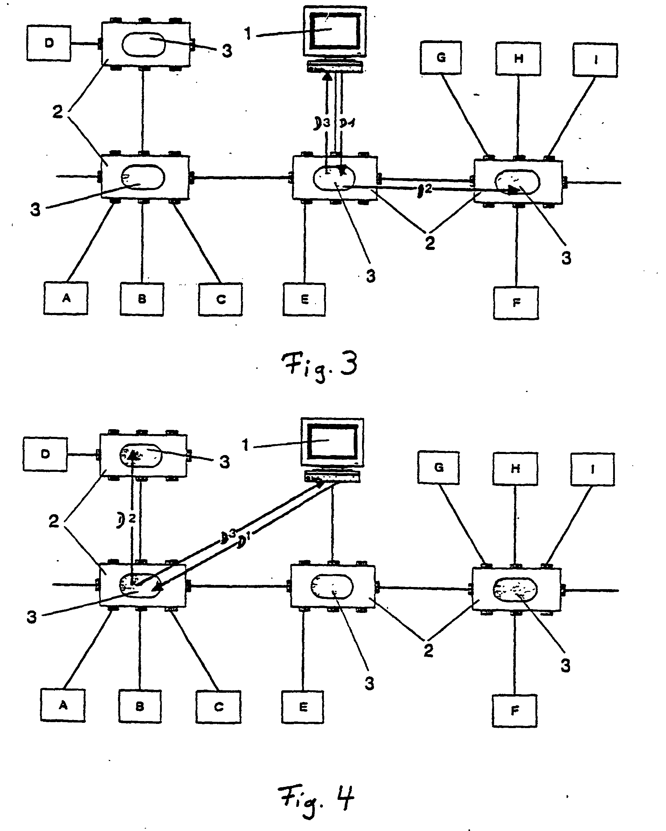

Demgegenüber zeigt Fig. 3 die entsprechende Datenübertragung D2 zur Konfiguration des Switches, welcher rechts vom ersten Switch angeordnet ist. Das Aufschalten der Switches im dargestellten Netzausschnitt wird mit der Datenübertragung D1 vom Konfigurationsrechner zum linken Switch abgeschlossen, welcher die notwendigen Daten zum Konfigurieren des noch nicht aufgeschalteten Switchs mit der Datenübertragung D2 an diesen übermittelt (Fig. 4).

Auf allen Switches läuft demnach das gleiche Verfahren ab, wobei alle Switches gleichberechtigt sind. Verfügt ein Switch bereits über eine gültige IP-Adresse, so wird dieser Switch derartig gestartet, dass nur der Teil des Dienstes abläuft, welcher die beschriebenen Netzparameter an die angeschlossenen Switches weitergibt. Die Unabhängigkeit der Switches ermöglicht auch eine problemlose Inbetriebnahme von Teilen einer Anlage.

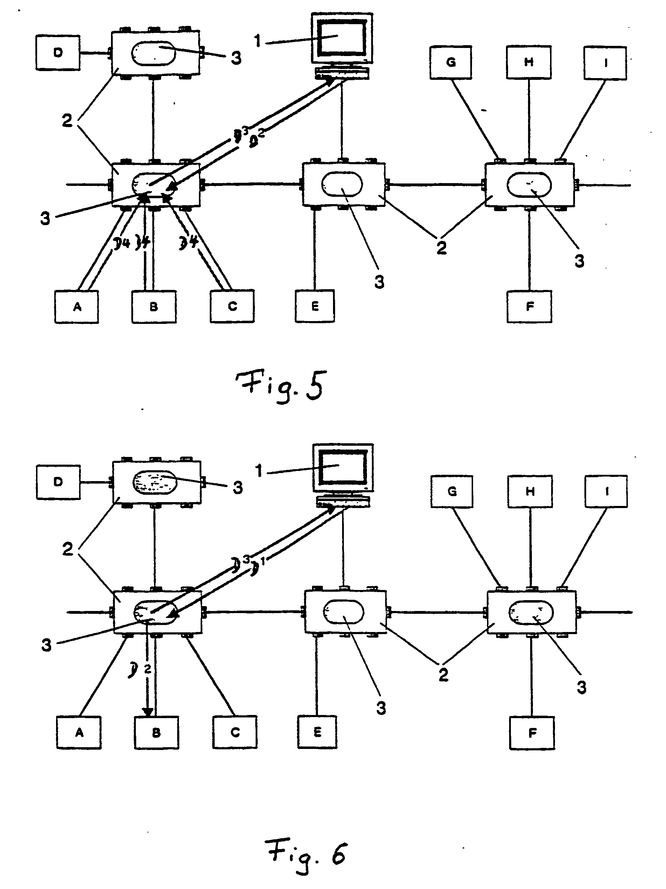

In der beschriebenen Ausführungsform senden die Endteilnehmer A bis F nach dem Anschalten ein Datenpaket wenn sie keine gültige IP-Adresse besitzen. Dies ist beispielhaft in Fig. 5 dargestellt. Mittels der Übertragung D4 werden dabei Datenpakete von den Endteilnehmern A, B und C an den Switch gesendet. Der Switch, an welchem die betreffenden Endteilnehmern angeschlossen sind, kann daraus die Ethernet-Adressen der Endteilnehmer ermitteln.

Erfindungsgemäß ist die Betrachtungsweise, dass der jeweilige Port oder der Switch die Ethernet-Adresse ermittelt identisch, da der Port als Teileinrichtung des Switches anzusehen ist.

Mit dem beschriebenen Verfahren wird erkannt, welche Ethernet-Adresse zu welchem Port an einem Switch gehört. Damit kann ein einzelner Switch alle Ethernet-Adressen der an ihn angeschlossenen Endteilnehmer mit der jeweiligen Zuordnung zum Port erfassen und mittels eines Datenpakets - z.B. auf eine Aufforderung durch den Konfigurationsrechner (Übertragung D2 in Fig. 5) an diesen senden (Übertragung D3 in Fig. 5).

Wird für einen Port mehr als eine Ethernet-Adresse gemeldet, so zeigt dies an, dass sich hinter dieser Kopplungseinrichtung weitere Kopplungseinrichtungen befinden, an denen weitere Teilnehmer angeschlossen sind.

Die beispielhafte Konfiguration des Endteilnehmers B ist in Fig. 6 dargestellt. Aufgrund der im Konfigurationsrechner abgelegten Zuordnung der IP-Adressen zu den jeweiligen Ports der Switches kann der Konfigurationsrechner nun ermitteln, welche Ethernet-Adresse zu welchem Port gehört. Hierzu wurde dem Konfigurationsrechner die ermittelte Ethernetadresse des Ports, an dem B anliegt, mittels der Übertragung D3 übermittelt. Nachfolgend kann der Konfigurationsrechner die IP-Adresse an den bestimmten Endteilnehmer B mittels der Übertragung D2 übertragen. Diese IP-Adresse wird daraufhin vom Endteilnehmer B gespeichert.

Es ist jedoch auch möglich, dass der Endteilnehmer mittels des obenstehend genannten RARP-Protokolls seine IP-Adresse selbst ermittelt, da dem Konfigurationsrechner nun die Ethernet-Adresse des Endteilnehmers bekannt ist.

Letzlich werden alle Endteilnehmer mit der ihr über den Port, an welchem sie angeschlossen sind, zugeordneten IP-Adresse versorgt, womit die Vergabe der IP-Adressen im beschriebenen Konfigurationsnetz abgeschlossen ist.

In einer weiteren Ausführungsform, nicht dargestellten Ausführungsform der Erfindung senden die Endteilnehmer keine Daten, wenn sie keine gültige IP-Adresse aufweisen, sondern warten, bis sie über einen Broadcast angesprochen werden. Dieser Broadcast wird vom Konfigurationsrechner 1 abgesetzt. Die darauf folgende Zuordnung der Ethernet-Adresse zur IP-Adresse erfolgt wie im vorangegangenen Beispiel. Dabei werden die von den Switches erfaßten Ethernet-Adressen der Endteilnehmer und die Port-Nummern, an denen die Teilnehmer angeschlossen sind, von den jeweiligen Switches abgespeichert, so dass diese Information vom Konfigurationsrechner abgerufen werden kann, sobald ein Switch über eine gültige IP-Adresse verfügt. Wie beschrieben, ist es jedoch auch möglich, dass der Switch die Daten ohne Aufforderung an den Konfigurationsrechner überträgt.

In einer anderen Ausführungsform der Erfindung werden die jeweiligen Zuordnungstabellen der IP-Adressen zu den Switches und den jeweiligen Ports in den Switches selbst gehalten. Weiterhin sind diese Kopplungseinrichtungen in der Lage, die abgespeicherten IP-Adressen selbst an die jeweiligen Endteilnehmer zu übermitteln, ohne daß ein externer Konfigurationsrechner in den Prozeß eingebunden wäre.

## Patentansprüche

1. Verfahren zur Konfiguration eines Kommunikationsnetzes, zur Vergabe jeweils einer vorbestimmten ersten Adresse an Teilnehmer (A .. F; 1,2) des Netzes, wobei das Netz zumindest eine Kopplungseinrichtung (2) und an dessen Ports angeschlossene Endteilnehmer (A .. F) und wenigstens eine Konfigurationseinrichtung aufweist, und einem Endteilnehmer jeweils eine erste und eine zweite Adresse zugeordnet ist,
**dadurch gekennzeichnet dass**
eine Zuordnung von vorbestimmten ersten Adressen zur Kopplungseinrichtung (2) und zu ihren jeweiligen Ports abgelegt ist, wobei zuerst die Kopplungseinrichtung (2) die zweiten Adressen von an ihren Ports angeschlossenen Endteilnehmern (A .. F) erfaßt, und danach die in der abgelegten Zuordnung vorbestimmten jeweiligen ersten Adressen an die durch die zweiten Adressen festgelegten Endteilnehmer (A .. F) gesendet werden, welche an den zugeordneten Ports angeschlossen sind.

2. Verfahren nach Anspruch 1, **dadurch gekennzeichnet dass** zuerst die jeweilige Kopplungseinrichtung (2) und nachfolgend die an den Ports der Kopplungseinrichtung angeschlossenen Endteilnehmer (D; A,B,C; E; G,H,I,F) jeweils mit ihren ersten Adressen konfiguriert werden.

3. Verfahren nach Anspruch 2, **dadurch gekennzeichnet dass** das Konfigurieren der Kopplungseinrichtungen (2) zumindest die Schritte umfaßt:
a) Senden der zugeordneten ersten Adresse an eine erste Kopplungseinrichtung (2) durch die Konfigurationseinrichtung
b) Senden eines Datenpakets an die erste Kopplungseinrichtung durch die Konfigurationseinrichtung, wobei das Datenpaket zumindest eine weitere erste Adresse und einen Port der ersten Kopplungseinrichtung (2) kennzeichnet, an welchem eine weitere Kopplungseinrichtung angeschlossen ist
c) Senden eines Datenpakets an die weitere Kopplungseinrichtung über den **gekennzeichnet**en Port durch die erste Kopplungseinrichtung, wobei das Datenpacket zumindest die der weiteren Kopplungseinrichtung zugeordneten ersten Adresse umfaßt.

4. Verfahren nach Anspruch 3, **dadurch gekennzeichnet dass** die Schritte b) und c) wiederholt werden, bis alle an der ersten Kopplungseinrichtung angeschlossenen weiteren Kopplungsvorrichtungen (2) jeweils die ihr zugeordnete erste Adresse erhalten haben.

5. Verfahren nach Anspruch 3 oder 4, **dadurch gekennzeichnet dass** die Schritte b) und c) mit der Maßgabe wiederholt werden, dass als erste Kopplungseinrichtung jeweils die zuletzt konfigurierte gilt, bis alle Kopplungseinrichtungen (2) des Netzes jeweils die ihr zugeordnete erste Adresse erhalten haben.

6. Verfahren nach einem der Ansprüche 1 bis 5, **dadurch gekennzeichnet dass** die Kopplungseinrichtungen (2) zumindest bis zum Empfang ihrer zugeordneten ersten Adresse ihre jeweiligen Ports auf einen "Receive-only"-Mode eingestellt haben.

7. Verfahren nach Anspruch 2, **dadurch gekennzeichnet dass** das Konfigurieren eines Endteilnehmer (A .. F) zumindest die Schritte umfaßt:
a) Absenden einer Nachricht durch den Endteilnehmer, wenn dieser keine gültige erste Adresse aufweist oder
im Ansprechen auf eine Broadcast-Aufforderung, welche von der Konfigurationseinrichtung abgesendet wurde
b) Erfassung der Nachricht durch die Kopplungseinrichtung (2), an welche der Endteilnehmer angeschlossen ist, wobei die zweite Adresse aus der Nachricht ermittelt wird.

8. Verfahren nach Anspruch 7, **dadurch gekennzeichnet dass** ferner die Schritte umfaßt sind: c) Senden eines Datenpakets durch die Kopplungseinrichtung (2) an die Konfigurationseinrichtung, wobei das Datenpaket zumindest Informationen zur Zuordnung der ersten Adresse zur zweiten Adresse des Endteilnehmers (A .. F) umfaßt
d) Senden eines Datenpakets durch die Konfigurationseinrichtung an den durch die zweite Adresse identifizierten Endteilnehmer (A .. F), wobei das Datenpaket zumindest die erste Adresse des Endteilnehmers umfaßt und
e) Abspeichern der ersten Adresse im Endteilnehmer.

9. Verfahren nach Anspruch 7, **dadurch gekennzeichnet dass** ferner die Schritte umfaßt sind:
c) Senden eines Datenpakets durch die Kopplungseinrichtung (2) an den durch die zweite Adresse identifizierten Endteilnehmer (A .. F), wobei das Datenpaket zumindest die erste Adresse des Endteilnehmers umfaßt und
d) Abspeichern der ersten Adresse im Endteilnehmer.

10. Verfahren gemäß einem der vorstehenden Ansprüche, **dadurch gekennzeichnet dass** das Kommunikationsnetz ein auf TCP/IP-basierendes Netz ist, wobei die erste und die zweite Adresse die IP- beziehungsweise die MAC-Adresse des jeweiligen Teilnehmers (A .. F) ist.

11. Kommunikationsnetz zur Ausführung eines Verfahrens nach einem der Ansprüche 1 bis 10, wobei das Netz zumindest eine Kopplungseinrichtung (2) und an dessen Ports angeschlossene Endteilnehmer (A .. F) und wenigstens eine Konfigurationseinrichtung aufweist, und einem Endteilnehmer jeweils eine erste und eine zweite Adresse zugeordnet ist,
**dadurch gekennzeichnet dass**
eine Zuordnung von vorbestimmten ersten Adressen zur Kopplungseinrichtung (2) und zu ihren jeweiligen Ports im Netz abgelegt ist, wobei die Kopplungseinrichtung (2) eingerichtet ist, die zweiten Adressen von an ihren Ports angeschlossenen Endteilnehmern (A .. F) zu erfassen, und danach die in der abgelegten Zuordnung vorbestimmten jeweiligen ersten Adressen an die durch die zweiten Adressen festgelegten Endteilnehmer (A.. F) zu senden, welche an den zugeordneten Ports angeschlossen sind.

12. Kommunikationsnetz nach Anspruch 11, **dadurch gekennzeichnet dass** eine Konfigurationseinrichtung und die Zuordnung der vorbestimmten ersten Adressen zur Kopplungseinrichtung (2) und zu ihren Ports in der jeweiligen Kopplungseinrichtung angeordnet ist.

13. Kommunikationsnetz nach Anspruch 11, **dadurch gekennzeichnet dass** die Konfigurationseinrichtung und die Zuordnung der vorbestimmten ersten Adressen zur den Kopplungseinrichtungen (2) und zu deren Ports in einem an das Netz angeschlossenen Konfigurationsrechner (1) angeordnet ist.

## Claims

1. Method for configuring a communications network for the assignment of a predetermined first address to each of the subscribers (A ... F; 1, 2) of the network wherein the network comprises at least one coupling device (2) and end subscribers (A ... F) connected to the ports of same and at least one configuration device, and a first and a second address are assigned to each end subscriber,
**characterised in that**
an assignment of predetermined first addresses to the coupling device (2) and to each of the ports of same is stored wherein firstly the coupling device (2) detects the second addresses of end subscribers (A ... F) connected to its ports and subsequently each of the first addresses predetermined in the stored assignment is sent to the end subscribers (A ... F) determined by the second addresses, said end subscribers (A ... F) being connected to the assigned ports.

2. Method according to claim 1,
**characterised in that** firstly the respective coupling device (2) and subsequently the end subscribers (D; A, B, C; E; G, H, I, F) connected to the ports of the coupling device are each configured with their first addresses.

3. Method according to claim 2, **characterised in that** the configuration of the coupling devices (2) comprises at least the steps:
a) sending of the assigned first address to a first coupling device (2) through the configuration device,
b) sending of a data packet to the first coupling device through the configuration device wherein the data packet characterises at least one further first address and a port of the first coupling device (2), to which port a further coupling device is connected,
c) sending of a data packet to the further coupling device via the **characterised** port through the first coupling device wherein the data packet comprises at least the first address assigned to the further coupling device.

4. Method according to claim 3, **characterised in that** the steps b) and c) are repeated until all further coupling devices (2) connected to the first coupling device have received the first address assigned to each of them.

5. Method according to claim 3 or 4, **characterised in that** the steps b) and c) are repeated with the measure that the most recently configured coupling device is deemed to be the first coupling device until all coupling devices (2) of the network have received the first address assigned to each of them.

6. Method according to one of the claims 1 to 5, **characterised in that** the coupling devices (2) have set their respective ports to "receive only mode" at least until receipt of their first assigned address.

7. Method according to claim 2, **characterised in that** the configuration of an end subscriber (A ... F) comprises at least the steps:
a) sending of a message through the end subscriber if the latter does not have a valid first address or in response to a broadcast request which has been sent by the configuration device,
b) detecting of the message through the coupling device (2) to which the end subscriber is connected wherein the second address is ascertained from the message.

8. Method according to claim 7, **characterised in that** the following steps are also included: c) sending of a data packet through the coupling device (2) to the configuration device wherein the data packet comprises at least information relating to the assignment of the first address to the second address of the end subscriber (A ... F),
d) sending of a data packet through the configuration device to the end subscriber (A ... F) identified by the second address wherein the data packet comprises at least the first address of the end subscriber and
e) storing of the first address in the end subscriber.

9. Method according to claim 7, **characterised in that** the following steps are also included:
c) sending of a data packet through the coupling device (2) to the end subscriber (A ... F) identified by the second address wherein the data packet comprises at least the first address of the end subscriber and
d) storing of the first address in the end subscriber.

10. Method according to one of the preceding claims, **characterised in that** the communications network is a TCP/IP based network wherein the first and the second address are the IP or MAC address of the subscriber (A ... F) in each case.

11. Communications network for carrying out a method according to one of the claims 1 to 10 wherein the network comprises at least one coupling device (2) and end subscribers (A ... F) connected to the ports of same and at least one configuration device, and a first and a second address are assigned to each end subscriber,
**characterised in that**
an assignment of predetermined first addresses to the coupling device (2) and to respective ports of same in the network is stored wherein the coupling device (2) is adapted to detect the second addresses of end subscribers (A ... F) connected to its ports, and subsequently to send each of the first addresses predetermined in the stored assignment to the end subscribers (A ... F) determined by the second addresses, said end subscribers (A ... F) being connected to the assigned ports.

12. Communications network according to claim 11, **characterised in that**
a configuration device and the assignment of the predetermined first addresses to the coupling device (2) and to the ports of same are arranged in the respective coupling device.

13. Communications network according to claim 11, **characterised in that**
the configuration device and the assignment of the predetermined first addresses to the coupling devices (2) and to the ports of same are arranged in a configuration computer (1) connected to the network.

## Revendications

1. Procédé pour configurer un réseau de télécommunication pour l'allocation de respectivement une première adresse prédéterminée à des participants (A .. F ; 1, 2) du réseau, le réseau comprenant au moins un dispositif de couplage (2) et des participants finaux (A .. F) raccordés à ses ports et au moins un dispositif de configuration et une première et une deuxième adresses étant attribuées respectivement à un participant final, **caractérisé en ce qu'**une attribution de premières adresses prédéterminées au dispositif de couplage (2) et à ses ports respectifs est consignée, alors qu'en premier lieu le dispositif de couplage (2) saisit les deuxièmes adresses de participants finaux (A .. F) raccordés à ses ports et qu'ensuite les premières adresses respectives prédéterminées dans l'attribution consignée sont envoyées aux participants finaux (A .. F) qui sont définis par les deuxièmes adresses et qui sont raccordés aux ports attribués.

2. Procédé selon la revendication 1, **caractérisé en ce qu'**en premier lieu le dispositif de couplage respectif (2) et ensuite les participants finaux (D ; A,B,C : E ; G,H,I,F) raccordés sur les ports du dispositif de couplage sont configurés respectivement avec leurs premières adresses.

3. Procédé selon la revendication 2, **caractérisé en ce que** la configuration des dispositifs de couplage (2) comprend au moins les étapes suivantes :
a) envoi par le dispositif de configuration à un premier dispositif de couplage (2) de la première adresse attribuée,
b) envoi par le dispositif de configuration d'un paquet de données au premier dispositif de couplage, le paquet de données caractérisant au moins une autre première adresse et un port du premier dispositif de couplage (2) auquel est raccordé un autre dispositif de couplage,
c) envoi par le premier dispositif de couplage d'un paquet de données à l'autre dispositif de couplage par l'intermédiaire du port **caractérisé**, le paquet de données comprenant au moins la première adresse attribuée à l'autre dispositif de couplage.

4. Procédé selon la revendication 3, **caractérisé en ce que** les étapes b) et c) sont répétées jusqu'à ce que tous les autres dispositifs de couplage (2) raccordés au premier dispositif de couplage aient respectivement reçu la première adresse qui leur est attribuée.

5. Procédé selon la revendication 3 ou 4, **caractérisé en ce que** les étapes b) et c) sont répétées sur la base du fait que comme premier dispositif de couplage s'applique respectivement celui qui a été configuré en dernier lieu, et ceci jusqu'à ce que tous les dispositifs de couplage (2) du réseau aient respectivement reçu la première adresse qui leur est attribuée.

6. Procédé selon l'une quelconque des revendications 1 à 5, **caractérisé en ce qu'**au moins jusqu'à la réception de leur première adresse attribuée, les ports respectifs des dispositifs de couplage (2) sont réglés sur un mode de « réception seule ».

7. Procédé selon la revendication 2, **caractérisé en ce que** la configuration d'un participant final (A .. F) comprend au moins les étapes suivantes :
a) envoi d'un message par le participant final lorsque celui-ci ne recèle pas de première adresse valable ou en réponse à une demande faite au moyen d'une émission par radio émanant du dispositif de configuration,
b) saisie du message par le dispositif de couplage (2) auquel est raccordé le participant final, la deuxième adresse étant déterminée à partir du message.

8. Procédé selon la revendication 7, **caractérisé en ce qu'**en outre sont comprises les étapes suivantes :
c) envoi par le dispositif de couplage (2) d'un paquet de données au dispositif de configuration, le paquet de données comprenant au moins des informations pour l'attribution de la première adresse à la deuxième adresse du participant final (A .. F),
d) envoi par le dispositif de configuration d'un paquet de données au participant final (A .. F) identifié par la deuxième adresse, le paquet de données comprenant au moins la première adresse du participant final et
e) mémorisation de la première adresse dans le participant final.

9. Procédé selon la revendication 7, **caractérisé en ce qu'**en outre sont comprises les étapes suivantes :
c) envoi par le dispositif de couplage (2) d'un paquet de données au participant final (A .. F) identifié par la deuxième adresse, le paquet de données comprenant au moins la première adresse du participant final, et
d) mémorisation de la première adresse dans le participant final.

10. Procédé selon l'une quelconque des revendications précédentes, **caractérisé en ce que** le réseau de télécommunication est un réseau basé sur des protocoles TCP/IP, la première et la deuxième adresses étant l'adresse IP ou MAC du participant final (A .. F) respectif.

11. Réseau de télécommunication pour la réalisation d'un procédé selon l'une quelconque des revendications 1 à 10, le réseau comprenant au moins un dispositif de couplage (2) et des participants finaux (A .. F) raccordés à ses ports et au moins un dispositif de configuration, et à un participant final étant respectivement attribuées une première adresse et une deuxième adresse, **caractérisé en ce qu'**une attribution au dispositif de couplage (2) et à ses ports respectifs de premières adresses prédéterminées est consignée dans le réseau, le dispositif de couplage (2) étant équipé pour saisir les deuxièmes adresses de participants finaux (A .. F) raccordés à ses ports et pour ensuite envoyer les premières adresses respectives prédéterminées dans l'attribution consignée aux participants finaux (A .. F) qui sont définis par les deuxièmes adresses et qui sont raccordés aux ports attribués.

12. Réseau de télécommunication selon la revendication 11, **caractérisé en ce qu'**un dispositif de configuration et l'attribution des premières adresses prédéterminées au dispositif de couplage (2) et à ses ports sont disposés dans le dispositif de couplage respectif.

13. Réseau de télécommunication selon la revendication 11, **caractérisé en ce que** le dispositif de configuration et l'attribution des premières adresses prédéterminées aux dispositifs de couplage (2) et à leurs ports sont disposés dans un calculateur de configuration (1) raccordé au réseau.
